# EUROPÄISCHE PATENTSCHRIFT

(11) **EP 1 909 372 B1**
(45) Veröffentlichungstag und Bekanntmachung des Hinweises auf die Patenterteilung: **11.09.2013**
(21) Anmeldenummer: 07019508.6
(22) Anmeldetag: 05.10.2007
(51) Int. Cl.: H02K 3/50, H02K 5/22

(54) **Motorspindel mit einem Stator und sechs Anschlüssen**
Spindle motor with a stator and six connections
Moteur d'entrainement doté d'un stator et de six raccordements

(30) Priorität: 05.10.2006 DE 102006047477
(43) Veröffentlichungstag der Anmeldung: 09.04.2008
(73) Patentinhaber: Franz Kessler GmbH, 88422 Bad Buchau (DE)
(72) Erfinder: Kades, Helmut, 88422 Bad Buchau (DE); Rondé, Uwe, Dr.-Ing., 88422 Bad Buchau (DE)
(74) Vertreter: Otten, Roth, Dobler & Partner

(56) Entgegenhaltungen:
- DE-A1- 4 411 784
- DE-A1- 10 235 632
- DE-U- 1 816 781
- FI-A- 20 002 644
- US-A- 4 547 689

## Beschreibung

Die Erfindung betrifft eine Motorspindel mit einem Stator mit wenigstens drei Motorspulen nach dem Oberbegriff des Anspruchs 1.

### Stand der Technik

Bislang sind Hauptantriebe für Werkzeugmaschinen, insbesondere Motorspindeln, häufig mit elektrischen Drehstrommotoren ausgerüstet. Nach wie vor wird die überwiegende Anzahl dieser Motoren als Drehstrom-Asynchronmotoren ausgeführt.

Je nach Anwendung werden diese Motoren im Stern- oder im Dreieck verschaltet, wobei die Spannung an der Wicklung bei Dreieckschaltung um den Faktor Wurzel 3 größer ist als bei Sternschaltung. Das heißt, bei gleichem Strom kann die Motorleistung mit der Dreieckschaltung gesteigert werden. Dies ist insoweit ein wesentlicher Vorteil, als dass die zur Speisung dieser Motoren verwendeten Frequenzumrichter in der Regel hinsichtlich des maximalen Stromes begrenzt sind.

Im Allgemeinen wird bei reiner Sternschaltung der Sternpunkt auf dem Wickelkopf verbunden und nicht aus dem Gehäuse herausgeführt. Der Vorteil hierbei ist, dass lediglich drei Kabel aus dem Motorgehäuse herauszuführen sind. Dies ist entsprechend auch bei einer reinen Dreieckschaltung vorzusehen, die jedoch normalerweise in der Praxis nicht eingesetzt wird.

Nachteilig ist jedoch, dass bei niedrigen Strömen der magnetische Fluss in den einzelnen Wicklungen bei der Dreieckschaltung deutlich kleiner als bei der Sternschaltung ist. Das heißt, dass bei niedrigen Strömen (häufig gekoppelt mit niedrigen Drehzahlen) das erzeugte Drehmoment gewöhnlich sehr niedrig ist.

Um diesen Nachteil zu umgehen, ist bereits bekannt, dass man eine sogenannte Stern-Dreieckschaltung verwenden kann. Hierbei wird je nach angesteuerter Drehzahl in der Maschinensteuerung zwischen einer Stern- und einer Dreieckschaltung umgeschaltet. Diese Umschaltung erfolgt außerhalb der Motorspindel, z.B. im Schaltschrank.

Allerdings benötigt man für eine Stern-Dreieckschaltung besonders gestaltete Statoren, bei denen sechs Kabel der einzelnen Spulenpunkte aus dem Statorgehäuse herausgeführt werden müssen und die dann zur Verbindung mit der zugehörigen Schaltung oder Steuereinheit zur Einstellung des Betriebsmodus entweder im Schaltschrank oder in anderweitig, z.B. in einem speziellen Klemmkasten, verschaltet bzw. angeklemmt werden müssen.

Bei reinen Stern- oder Dreiecksmotoren hingegen werden die Spulenenden der Statorspulen intern entsprechend verbunden und nur die drei erforderlichen Phasen über Kabelanschlüsse mit der Energieversorgung gekoppelt.

Dementsprechend müssen für Sternmotoren, Dreieckmotoren oder Stern-Dreieckmotoren bei ansonsten gleichen Motorparametern trotzdem jeweils unterschiedlich gestaltete Motoren hergestellt und entsprechend in die Werkzeugmaschine eingebaut werden.

Gemäß der DE 102 31 092 Al ist bereits ein kleiner Lüftermotor als Außenlaufermotor mit geringer Leistung bekannt, der über einen Anschlussstecker mittels U-förmiger Brückenelemente von einer Dreiecks- in eine Sternverschaltung der Motorspulen und umgekehrt umprogrammierbar ist, so dass sehr flexibel Kundenwünsche bezüglich entsprechend vorkonfektionierter Stern- oder Dreiecks-Motoren erfüllbar sind. Ein Betrieb des Lüftermotors in Stern-DreieckSchaltung, d.h. anfänglich in Sternschaltung und nach einer gewissen Zeit bzw. bei bestimmter Drehzahl in Dreieckschaltung, ist mit einem derartig durch die blanken, metallischen U-Bügel festgelegten bzw. fest verschalteten Anschlussstecker in keinster Weise realisierbar. Eine Anwendung derartiger festverschalteter, in jeder verschaltungsart zwingend notwendiger Anschlussstecker für leistungsstarke Motorspindeln ist bereits aus diesem Grund ausgeschlossen.

Dieser Anschlussstecker ist permanent am Lüftermotor angeordnet und weist offene Kontaktstellen auf, an die je nach gewünschter Betriebsart die offen liegenden, metallischen Brückenelemente oder Anschlusskabel anzuschließen sind. Offene metallische Kontaktstellen können in Lüftern durchaus toleriert werden, da der Lüftermotor mittig innerhalb eines Lüftergehäuses unzugänglich angeordnet ist. Ein Einsatz in Werkzeugmaschinen ist jedoch für einen derart ausgebildeten offenen Anschlussstecker aufgrund entsprechender Umweltbedingungen ausgeschlossen.

Zudem ist der Anschlussstecker als Mehrfachstecker für alle Spulenwicklungsenden ausgebildet. Dies ist bei den in Motorspindeln vorhandenen elektrischen Leistungen bzw. Ströme unter anderem aufgrund der beengten Platzverhältnisse und der notwendigen elektrischen Isolation derart starker Ströme nicht realisierbar, wie dies beispielsweise in der DE 102 35 632 A1 der Anmelderin dargelegt wird.

Aus der US 4,547,689 sind Elektro-Motoren bekannt, wobei ein Mehrfachstecker für die Energieversorgung und wiederum fest verschaltete Umschaltstecker vorgesehen sind. Mit einem ersten Umschaltstecker ist ein entsprechend in Sternschaltung vorkonfektionierter, erster Motor wahlweise zwischen einfacher Sternschaltung und doppelter Sternschaltung betreibbar. Dagegen wird bei einem zweiten, in Dreieckschaltung vorkonfektionierten Motor mit einem anderen bzw. zweiten Umschaltstecker zwischen einfacher Dreiecksschaltung und doppelter Dreiecksschaltung umgeschalten. Hiermit soll die Betriebsspannung verdoppelt werden. Ein Wechsel des Betriebsmodus, d.h. den Elektromotor in Stern- oder Dreiecksschaltung oder sogar in Stern-Dreiecksschaltung zu betreiben, ist nicht vorgesehen und auch nicht realisierbar. Vielmehr wird hier durch die speziell vorkonfektionierten Stecker eine Anpassung an niedrige (amerikanische) Netzspannungen und an höhere (europäische) Netzspannungen realisierbar.

Eine Umschaltung des Motors zwischen Stern- und Dreieckschaltung ist mit diesen festgelegten bzw. fest verschalteten Umschaltsteckern nicht zu verwirklichen. Auch mit derartigen, in jeder Verschaltungsart zwingend notwendigen Umschaltsteckern ist somit ein Betrieb des Motors in Stern-Dreieck-Schaltung, d.h. anfänglich in Sternschaltung und nach einer gewissen Zeit bzw. bei bestimmter Drehzahl in Dreieckschaltung, in keinster Weise realisierbar. Eine Anwendung derartiger festverschalteter Umschaltstecker für leistungsstarke Motorspindeln in Werkzeugmaschinen ist somit völlig auszuschließen.

Auch bei diesem Stand der Technik werden für den Kabelanschluss jeweils Mehrfachstecker und Mehrfachkabel unter anderem für die Energieversorgung des Motors vorgesehen. Mehrfachstecker und Mehrfachkabel sind jedoch bei Anwendungen bei modernen Motorspindeln mit großer Leistung und hoher Drehzahl, wobei zum Teil elektrische Ströme von ca. 150 A vorzusehen sind, aufgrund der notwendigen elektrischen Isolierung der Kabel beim vorhandenen Platzangebot an der Motorspindel und innerhalb einer Werkzeugmaschine in der Praxis nicht einsetzbar.

Aufgrund dessen werden, wie oben bereits kurz angedeutet, gemäß der DE 102 35 632 A1 der Anmelderin für jede stromführende Anschlussleitung jeweils eine separate Steckverbindung bzw. ein Einzelkabelanschluss am Spindelgehäuse vorgeschlagen. Diese können entsprechend stark isoliert werden und sind trotzdem gut handzuhaben. Eine derart ausgebildete Motorspindel bzw. deren Motorspulen wurde bislang jedoch entweder in Sternschaltung oder in Dreieckschaltung, insbesondere in Stern-Dreieckschaltung, im Stator fest vorkonfektioniert. Das heißt, dass ein Stern-Motor lediglich drei, am Motorspindelgehäuse nach außen geführte Einzelkabelanschlüsse aufwies, um unter anderem den Aufwand für das Verschalten der Spulen und des Isolierens der Anschlüsse zu reduzieren und um mit dem geringen Platzangebot gut auszukommen.

Dagegen waren bei Motorspindeln mit einer Stern-Dreieckschaltung sechs, am Motorspindelgehäuse nach außen geführte Einzelkabelanschlüsse vorhanden, die über einen Klemmkasten in der Werkzeugmaschine oder über einen separat neben der Werkzeugmaschine angebrachten Schaltschrank im Betrieb von einer Sternschaltung in eine Dreieckschaltung umgeschaltet wurden.

Zudem ist der Platz für eine Motorspindel in modernen Werkzeugmaschinen sehr begrenzt. Hierbei ist die Motorspindel nicht nur nach außen, sondern aufgrund der notwendigen Kühlung sowie der in der Motorhohlwelle unterzubringenden Lösemechaniken etc. auch nach innen räumlich begrenzt ist. Die Anforderungen an hohe Leistung und somit bei begrenzter Spannung an hohe Ströme bei hohen Drehzahlen und hohen Drehmomenten der Motorspindeln sind jedoch in den letzten Jahren ständig gestiegen. Mit einer weiteren Steigerung dieser Anforderungen an Motorspindeln für Werkzeugmaschinen ist auch für die nächsten Jahre zu rechnen.

Weiterhin sind aus den Druckschriften DE 1 816 781 Ul und FI 20 002 644 A Motoren mit nicht elektrisch isolierten Verbindungsblechen bekannt.

### Aufgabe und Vorteile der Erfindung

Aufgabe der Erfindung ist es demgegenüber, eine Motorspindel mit einem Stator mit wenigstens drei Motorspulen, wobei eine Energieversorgung mit drei elektrischen Phasen vorgesehen ist und wobei der Stator wenigstens sechs freie Anschlüsse zum elektrisch leitenden Anschließen von Motorspulenanfängen und Motorspulenenden der Motorspulen an die drei Phasen aufweist, vorzuschlagen, wobei vor allem die Herstellung von unterschiedlichsten Motorspindeln für eine Sternschaltung oder Dreieckschaltung oder Stern-/Dreieckschaltung vereinfacht wird.

Diese Aufgabe wird, ausgehend von einer Motorspindel der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Motorspindel unter anderem dadurch aus, dass die Motorspindel eine Verbindungsvorrichtung zum elektrisch leitenden Verbinden von wenigstens drei Einzelkabelanschlüssen umfasst, so dass ein Sternschaltungs-Modus der Motorspulen realisierbar ist.

Mit Hilfe einer derart vorteilhaften Verbindungsvorrichtung der Motorspindel kann ein gemeinsamer Typ einer Motorspindel mit sechs freien Einzelkabelanschlüssen bzw. Ausgängen der Motorspulenanfänge oder Motorspulenenden für alle möglichen Verschaltungsarten, d.h. für eine Sternschaltung, eine Dreieckschaltung oder eine Stern-/Dreieckschaltung, hergestellt werden. Durch die Montage der Verbindungsvorrichtung entsteht eine Motorspindel in Sternbetriebsweise. Durch das Entfernen der Verbindungsvorrichtung kann die Motorspindel wieder in Dreieckschaltung oder in Stern-/Dreieckschaltung betrieben werden. Gemäß der Erfindung kann hierdurch eine Erhöhung der Stückzahlen vorteilhaft gleich gestalteter Motorspindeln erreicht werden, was sich kostensenkend auswirkt.

Darüber hinaus kann sowohl die Lagerhaltung als auch der Vertrieb bzw. die Auslieferung entsprechender Motorspindeln bzw. unterschiedlich verschalteter Motorspindeln deutlich vereinfacht bzw. reduziert werden. Auch dies senkt die Kosten für einen entsprechenden Motorspindelhersteller.

Beispielsweise können Motorspindeln mit entsprechenden, sechs freien Einzelkabelanschlüssen erst unmittelbar bzw. kurz vor Auslieferung als sternverschaltete Motorspindel oder als stern-/dreieckverschaltete Motorspindel oder gar als dreieckverschaltete Motorspindel mit Hilfe der erfindungsgemäßen Verbindungsvorrichtung konfiguriert bzw. festgelegt werden.

Hierdurch wird auch eine deutlich höhere Flexibilität bezüglich z.B. sehr kurzfristiger Kundenwünsche oder Anforderungen erreicht. Dementsprechend wird mit Hilfe der Erfindung eine deutlich verbesserte Flexibilität des Motorspindelherstellers erreicht.

Weiterhin entfallen entsprechende Kabel, die bislang gemäß dem Stand der Technik zu einem zumeist neben, insbesondere an der Wand neben der Werkzeugmaschine oder z.T. in der Werkzeugmaschine angeordnete Schalt- bzw. Klemmkasten geführt und in diesem separat verschaltet wurden. Gemäß der Erfindung wird im Vergleich zu diesem Stand der Technik eine deutliche Vereinfachung der Verkabelung bzw. der Montage entsprechender Motorspindeln bzw. Werkzeugmaschinen sowie eine enorm Platz sparende Energieversorgung der Motorspindel erreicht.

Allerdings sind die Einzelkabelanschlüsse der Motorspindel zur Energieversorgung aufgrund der flexiblen und Platz sparenden Anordnungsmöglichkeit bei modernen, sehr kompakten sowie leistungsstarken mit sehr hohen Drehzahlen zu betreibenden Motorspindeln von entscheidender Bedeutung. Die elektrische Isolierung der Anschlüsse benötigt derart viel Raum, dass ein Mehrfachstecker mit abgehenden bzw. losen (Mehrfach-) Kabeln nicht realisierbar ist.

Entsprechend der Kompaktheit der Motorspindel kann zur Herstellung der Sternschaltung jedoch eine an der Motorspindel angeordnete Verbindungsvorrichtung zur Überbrückung von mehreren Anschlüsse vorgesehen werden, wobei aufgrund des vorteilhaften Fehlens von losen bzw. einzelnen Kabeln die elektrische Isolation der einzelnen Anschlüsse innerhalb der Verbindungsanordnung sicher gewährleistet werden kann. Hierbei kann auf das Vorhandensein loser bzw. abgehender einzelner Kabel oder eines Mehrfachkabels verzichtet werden. Folglich kann durch die Verbindungsvorrichtung gemäß der Erfindung die elektrische Isolation der Einzelkabelanschlüsse bei sehr hohen Strömen bzw. großen Leistungen der Motorspindel gewährleistet werden und trotzdem eine sehr kompakte, Platz sparende Vorrichtung realisiert werden.

Gemäß der Erfindung sind die sechs Einzelkabelanschlüssen als lösbar verbindbare Stecker oder Buchsen einer Steckverbindung ausgebildet, so dass mit einer entsprechend ausgebildeten bzw. passenden Verbindungsvorrichtung gemäß der Erfindung ein einfaches Anbringen der Verbindungsvorrichtung an der Motorspindel bzw. den freien Einzelkabelanschlüssen erreicht wird.

In einer vorteilhaften Variante der Erfindung sind die Einzelkabelanschlüsse an einem Motorgehäuse, insbesondere einer Stirnseite des Motorgehäuses und/oder einem Motorgehäuseflansch angeordnet. Die Anordnung der Verbindungsvorrichtung bzw. der Einzelkabelanschlüsse an der Stirnseite der Motorspindel ermöglicht einen kompakten, Platz sparenden Einbau der Motorspindel in der Werkzeugmaschine, wobei diese eine im Wesentlichen lediglich zylinderförmige Ausnehmung für die Motorspindel benötigt.

Weiterhin kann durch die stirnseitige Anordnung der Verbindungsvorrichtung bzw. der Einzelkabelanschlüsse eine Ringanordnung, vorzugsweise im äußeren Bereich der Stirnseite des Stators, dieser verwirklicht werden. Hierdurch wird bei begrenztem Platzangebot an der Motorspindel bzw. in der Werkzeugmaschine ein größtmöglicher Anschlussbereich für die Verbindungsvorrichtung und für die Einzelkabelanschlüsse generiert. Dementsprechend gut bzw. voluminös kann die Isolierung der Verbindungsvorrichtung und auch der Einzelkabelanschlüsse umgesetzt werden, was sich vorteilhaft für die Betriebssicherheit auswirkt.

Vorzugsweise sind die Einzelkabelanschlüsse an einer der Werkzeugaufnahme gegenüberliegenden Stirnseite des Motorgehäuses angeordnet. Hierdurch wird erreicht, dass eine erfindungsgemäße Motorspindel im Wesentlichen ohne spezielle Spindelaufnahmen in bislang handelsüblichen Werkzeugmaschinen aufgenommen werden können. Das bedeutet, dass entsprechende Werkzeugmaschinenaufnahmen im Allgemeinen nicht speziell für eine erfindungsgemäße Motorspindel präpariert werden müssen.

Die der Werkzeugaufnahme gegenüberliegenden Stirnseite der Motorspindel ist im Allgemeinen besonders leicht zugänglich, so dass auch die Einzelkabelanschlussverbindungen entsprechend einfach hergestellt und gegebenenfalls bei Bedarf wieder entfernt werden können. Dies ist unter anderem für Wartungs- oder Reparaturarbeiten der Motorspindel von Vorteil.

In einer bevorzugten Variante der Erfindung ist die Verbindungsvorrichtung bzw. der Steckverbinder, insbesondere in Draufsicht bzw. im Querschnitt, im Wesentlichen als Ringsegment ausgebildet. Hiermit wird erreicht, dass eine nahezu optimale Anpassung der Verbindungsvorrichtung bzw. des Steckverbinders an die stirnseitige, ringartige Anordnung der Einzelkabelanschlüsse am Motorspindelgehäuse bzw. dem Stator erfolgt. Dies ermöglicht eine besonders kompakte Einheit von Motorspindel mit angebrachter Verbindungsvorrichtung bzw. Steckverbinder.

Zudem kann bei einer ringartigen Anordnung der Verbindungsvorrichtung bzw. der Einzelkabelanschlüsse an einer Stirnseite der Motorspindel im zentralen bzw. achsnahen Bereich der Motorspindel Platz für die Lösemechanik, und gegebenenfalls für die Zufuhr von Betriebsfluiden, z.B. Kühl-/Schmiermittel, etc. in vorteilhafter Weise geschaffen werden.

Gemäß der Erfindung weist die Verbindungsvorrichtung drei Steckeranschlüsse für drei der Einzelkabelanschlüsse auf, die insbesondere mit einem fest fixierten elektrischen Leiterelement verbunden sind. Hiermit wird z.B. erreicht, dass lediglich mit einem einzigen Element bzw. einer einzigen Baueinheit die sechs freien Einzelkabelanschlüsse in eine vorteilhafte Sternschaltung verschaltet bzw. modifizierbar sind. Durch eine unlösbare Fixierung des Leiterelementes innerhalb der Verbindungsvorrichtung wird die Gefahr einer falschen Betriebsweise beseitigt. Zudem kann die Verbindungsvorrichtung an der Motorspindel vorzugsweise lösbar fixiert werden, z.B. mittels Schrauben oder dergleichen.

Vorzugsweise ist das Leiterelement als Brücke zum Überbrücken der Einzelkabelanschlüsse ausgebildet. Ein entsprechend als Brücke ausgebildetes Leiterelement benötigt keine komplexen bzw. verstellbaren und somit störungsanfälligen Komponenten. Hierdurch ist die Herstellung entsprechender Verbindungsvorrichtungen gemäß der Erfindung besonders wirtschaftlich günstig und störungssicher realisierbar.

Erfindungsgemäß ist im montierten Zustand der Verbindungsvorrichtung das Leiterelement und die Einzelkabelanschlüsse von einer elektrischen Isoliereinheit, insbesondere aus Kunststoff bestehend, ummantelt. Beispielsweise ist eine derart ausgebildete

Verbindungsvorrichtung als einfache, steckbare Baueinheit am Motorspindelgehäuse bzw. der Stirnseite der Motorspindel montierbar.

Gemäß der Erfindung weisen wenigstens die mit der Verbindungsvorrichtung zu verbindenden Anschlüsse jeweils ein elektrisches Isolierelement auf, vorzugsweise als Isolationshülse ausgebildet, wobei durch die Montage der Verbindungsvorrichtung jedes der elektrischen Isolierelemente jeweils mit der elektrischen Isoliereinheit einen zumindest in Montage-Richtung ausgerichteten Isolations-Überlapp ausbildet. Mit dieser Maßnahme wird erreicht, dass die elektrische Isolierung des Anschlusses durch das Isolierelement sowohl bei angeschlossenem Einzelkabel als auch bei aufgebrachtem bzw. angestecktem Steckverbinder bzw. Verbindungsvorrichtung möglichst optimal ist. Entsprechend vorteilhaft kann das Isolierelement als Adapter für die beiden Anschlussverbindungsarten ausgebildet werden, d.h. Anschluss an ein Einzelkabel oder an die Verbindungsvorrichtung bzw. an den Steckverbinder.

Weiterhin gewährleistet gerade der in Montage-Richtung ausgerichteten Isolations-Überlapp eine sichere und vollständige elektrische Isolation der Verbindung durch die Verbindungsvorrichtung. Hierbei können auch Montage- oder Fertigungstoleranzen der exakten Abmessungen der isolationskomponenten ausgeglichen werden.

Bevorzugt weist jeder der Anschlüsse der Verbindungsvorrichtung wenigstens einen Isolations-Vorsprung auf, wobei durch die Montage der Verbindungsvorrichtung jeder der Isolations-Vorsprünge jeweils mit den jeweiligen elektrischen Isolierelementen einen Isolations-Überlapp ausbildet. Hierdurch kann jeder Anschluss sicher und vollständig zur Umgebung, insbesondere zu einem benachbarten Anschluss, elektrisch isoliert werden.

In einer besonderen Weiterbildung der Erfindung ist wenigstens eine Ummantelung zum feuchtigkeits- und/oder staubdichten Ummanteln des elektrischen Leiterelementes und der zu verbindenden Anschlüsse vorgesehen. Gerade bei Anwendungen in Werkzeugmaschinen kann die Funktionsfähigkeit elektrischer Komponenten bzw. System durch Staub, Dreieck und/oder flüssiges Kühlschmiermittel oder dergleichen beeinträchtigt werden. Mit Hilfe dieser vorteilhaften Maßnahme kann die Betriebssicherheit bzw. die Funktionsfähigkeit der Motorspindel bzw. der Energieversorgung der Motorspindel sicher gewährleistet werden.

Beispielsweise kann die Verbindungsvorrichtung mittels einer einzigen Dichtungskomponente gegenüber dem Motorspindelgehäuse bzw. Statorgehäuse abgedichtet werden. Alternativ oder in Kombination hierzu kann auch jeder Anschluss für sich und/oder das Isolationselement mittels einer einzigen Dichtungskomponente gegenüber dem Motorspindelgehäuse isoliert werden. Entsprechend kann wenigstens zwischen dem Stator und der Verbindungsvorrichtung eine Dichteinheit zum wasserdichten Abdichten der zu verbindenden Anschlüsse vorgesehen werden.

Vorteilhafterweise umfasst die Dichteinheit für jeden zu verbindenden Anschluss jeweils wenigstens ein Dichtelement. Vorzugsweise umfasst das Isolationselement wenigstens eine Dichtungskomponente für die Abdichtung gegen die Verbindungsvorrichtung und/oder für die Abdichtung gegen das Motorspindelgehäuse. Hierbei kann z.B. die Abdichtung der Isolationselemente gegenüber dem Motorspindelgehäuse und der Verbindungsvorrichtung oder dem Einzelkabelstecker in vorteilhafter Weise umgesetzt werden, was zu einer besonders hohen Betriebssicherheit bei Anwendungen der Motorspindel gemäß der Erfindung in Werkzeugmaschinen führt.

Mit diesen Varianten der Erfindung kann auch eine Mehrfachfunktion der Dichtungskomponenten bzw. der Isolationselemente realisiert werden, einerseits für eine Anschlussverbindung mit einem Einzelkabel und andererseits für eine Anschlussverbindung mit der Verbindungsvorrichtung.

Beispielsweise sind je Einzelkabelanschluss eine Dichtung bzw. ein O-Ring oder dergleichen vorgesehen, so dass jeder der Einzelkabelanschlüsse im montierten Zustand der verbindungsvorrichtung oder des Einzelkabels sicher abgedichtet ist, vorzugsweise sowohl gegenüber dem Motorspindelgehäuse und/oder gegenüber der Isoliereinheit bzw. der Ummantelung der Verbindungsvorrichtung.

Generell wird gemäß der Erfindung erreicht, dass ein spezieller bzw. separater neben der Werkzeugmaschine z.B. an einer Wand angeordneter Schaltkasten oder ein in der Werkzeugmaschine befindlicher Klemmkasten für die Herstellung einer Sternschaltung bei Motorspindeln mit sechs freien Ausgängen bzw. Anschlüssen entfällt.

Zudem ermöglicht die Erfindung für unterschiedliche Spindeln gleiche Statoren zu verwenden, so dass sich die Herstellung bzw. die Verwaltung entsprechender Statoren entscheidend vereinfacht.

Die Spindeln gemäß der Erfindung werden unabhängig von der späteren Verschaltung derart ausgeführt, dass die sechs Kabelabgänge bzw. freien Einzelkabelanschlüsse vorzugsweise als Stecker bzw. Buchsen ausgebildet sind. Für eine Spindelvariante mit einer Sternschaltung, z.B. für Umdrehungen von maximal 10.000 Umdrehungen/Minute, wird ein erfindungsgemäßes Steckerteil bzw. die Verbindungsvorrichtung verwendet, so dass die Sternpunkte der Motorspulen in vorteilhafter Weise miteinander verbunden sind. Dagegen weist die entsprechende Motorspindel in Dreieckverschaltung ca. 14.000 Umdrehungen/Minute auf.

Für die Stern-/Dreieckvariante entsprechender Motorspindeln werden die sechs freien Anschlüsse bzw. die Steckerbuchsen lediglich mit einem Einzelkabel oder dergleichen verbunden, so dass diese z.B. für Netzumrichter bzw. Steuer- oder Kontrolleinheiten in vorteilhafter Weise anschließbar sind.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung einer Sternschaltung und einer Dreieckschaltung für Drei-Phasen-Systeme,
- Figur 2: eine schematische Draufsicht auf eine Stirnseite einer Motorspindel mit Steckverbinder gemäß der Erfindung und
- Figur 3: eine schematische, vergrößerte Schnittdarstellung in Seitenansicht einer erfindungsgemäßen Motorspindel.

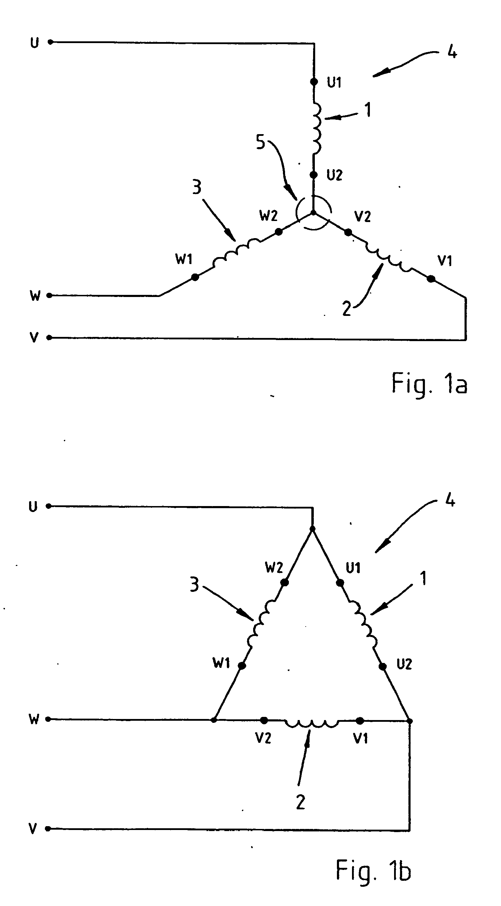

In Figur 1 ist schematisch eine Sternschaltung gemäß Figur 1a und gemäß Figur 1b eine Dreieckschaltung dreier Phasen U, V, W abgebildet. Eine Motorspindel 4 umfasst z.B. drei Spulen 1, 2, 3, die jeweils ein Wicklungsende U₂, V₂, W₂ sowie einen Wicklungsanfang U₁, V₁, W₁ aufweisen.

Im Sternpunkt der Sternschaltung sind drei Wicklungsenden U₂, V₂, W₂ mittels einem Verbinder 5 elektrisch leitend verbunden. Der Verbinder 5 ist in Figur 1a schematisch als Strichlinie skizziert.

Gemäß der Dreieckschaltung sind die drei Spulen 1, 2, 3 jeweils mit dem Anfang bzw. Ende einer anderen Spule 1, 2, 3 miteinander verbunden.

Bei beiden Schaltungen werden die drei Phasen U, V, W vorzugsweise mit einem nicht näher dargestellten Netzumrichter verbunden.

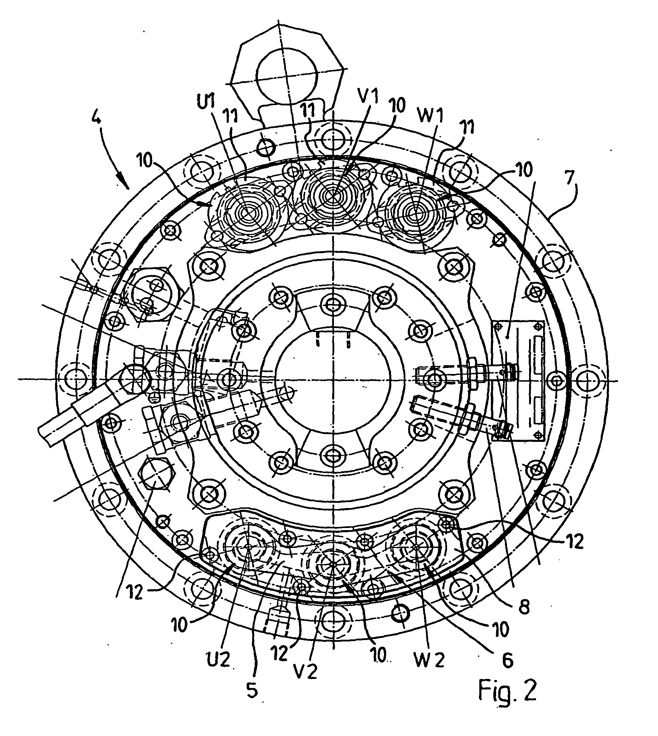

In Figur 2 wird gezeigt, dass die Motorspulenanfänge U₁, V₁, W₁ sowie die Motorspulenenden U₂, V₂, W₂ als freie Anschlüsse bzw. als Steckerbuchsen an einer Stirnseite der Motorspindel 4 angeordnet bzw. ausgebildet sind. Gemäß der Definition der vorliegenden Erfindung weist ein Gehäuse 7 der Motorspindel 4 die sechs Anschlüsse bzw. die Wicklungsanfänge U₁, V₁, W₁ sowie Wicklungsenden U₂, V₂, W₂ auf.

Weiterhin veranschaulicht Figur 2, dass ein Steckerteil 6 den Verbinder 5 zum elektrisch leitenden Verbinden der Wicklungsenden U₂, V₂, W₂ aufweist. Zudem sind die Wicklungsanfänge U₁, V₁, W₁ als Steckerbuchsen stirnseitig an der Motorspindel 4 angeordnet.

Das Steckerteil 6 bewirkt eine Sternschaltung der Spulen 1, 2, 3, so dass die Spulenanfänge U₁, V₁, W₁ in nicht näher dargestellter Weise mittels Stecker aufweisenden Kabeln z.B. zu einem Netzumrichter geführt werden können.

Darüber hinaus wird gerade in Figur 2 deutlich, dass es sich bei den sechs Anschlüssen bzw. Spulenenden um im Wesentlichen sechs identische Einzelkabelanschlüsse 10 handelt. Dementsprechend kann die Motorspindel 4 in einem Betriebsmodus mit Hilfe von sechs Einzelkabelstecker 11 angeschlossen bzw. mit Energie versorgt werden, d.h. insbesondere mittels einem nicht näher dargestellten Schalt-/Klemmschrank oder dergleichen. Bei einer derartigen Verschaltung kann dann die Motorspindel 4 in einer Dreieckschaltung oder in einer Stern-/Deieckschaltung betrieben werden.

Gewöhnlich werden derartig konfigurierte Motorspindeln 4 in einer bevorzugten Sterndreieckschaltung betrieben, wobei die Umschaltung mittels einer vorteilhaften Kontrolleinheit bzw. in einem entsprechenden Schaltschrank erfolgt. Hierbei wird vorzugsweise in einer Anlaufphase die Motorspindel in Sternverschaltung bis zu einer bestimmten Drehzahl hochgefahren und dann auf Dreieckverschaltung umgeschaltet, um mit einer besonders hohen Drehzahl bzw. Leistung arbeiten zu können.

Dagegen ist jedoch die Motorspindel 4 gemäß Figur 2 in einer Sternverschaltung konfiguriert, da die Spulen- bzw. die Wicklungsenden U₂, V₂, W₂ mit Hilfe des Steckerteils 6 elektrisch leitend verbunden sind, wie dies in Figur 1a schematisch dargestellt ist. Dementsprechend sind die Wicklungsanfänge U₁, V₁, W₁ mit Hilfe von Einzelkabelstecker 11 mit der Energieversorgung bzw. einem entsprechenden Schalt-/Klemmschrank oder dergleichen elektrisch verbunden.

Vorzugsweise werden sowohl die Einzelkabelstecker 11 mittels Fixierelemente, vorzugsweise Schrauben, am Motorspindelgehäuse 7 sicher fixiert. Entsprechend wird auch das Steckerteil 6 mittels Fixierelemente bzw. Schrauben 12 am Motorspindelgehäuse 7 fest fixiert. Demzufolge wird sich weder das Steckerteil 6 als auch die Einzelkabelstecker 11 im Betrieb selbsttätig lösen, so dass die Betriebssicherheit der Motorspindel 4 gewährleistet ist.

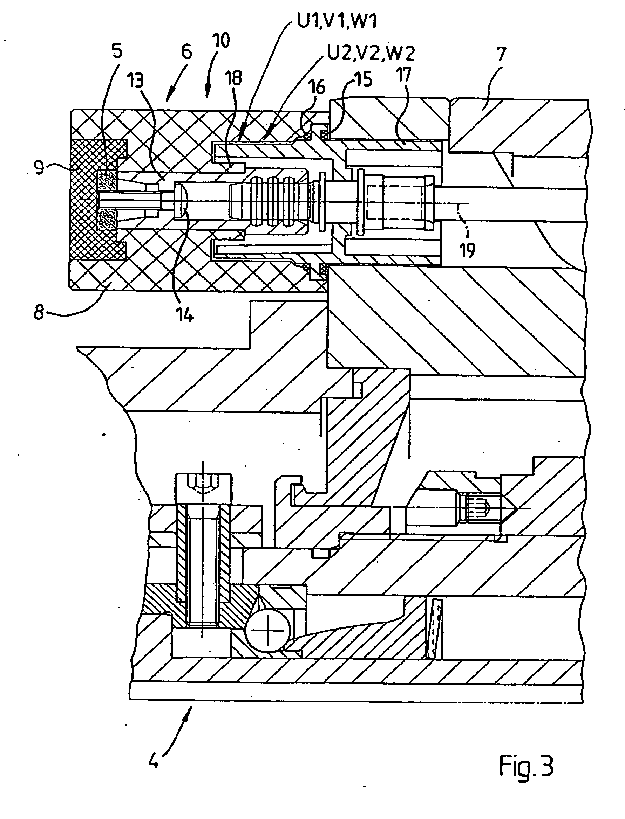

In Figur 3 ist schematisch das Steckerteil 6 seitlich im Schnitt abgebildet. Hierbei wird deutlich, dass es sich beim Verbinder 5 um ein einfaches elektrisches Leiterelement handelt, womit die jeweiligen Anschlüsse bzw. Spulen miteinander verbunden bzw. überbrückt werden. Das Steckerteil 6 weist Kunststoffisolierungen 8, 9 auf, womit der elektrisch leitende Verbinder 5 wirkungsvoll nach außen elektrisch isoliert ist.

Der Aufbau bzw. die Anordnung des Steckerteils 6 am Motorspindelgehäuse 7 wird gerade in Figur 3 deutlich. Die Wicklungsanfänge U₁, V₁, W₁ bzw. Wicklungsenden U₂, V₂, W₂ können gemäß der Erfindung mit Hilfe des Steckerteils 6 bzw. dessen Verbinder 5 elektrisch leitend verbunden bzw. überbrückt werden, so dass eine vorteilhafte Sternverschaltung der Spulen der Motorspindel 4 realisiert wird.

Bei den bei Motorspindeln üblichen Rahmenbedingungen, das heißt Leistungen von etwa 10 kW oder mehr, bei Strömen von durchaus 150 A und einer notwendigen bzw. vorgeschriebenen Spannungsfestigkeit von bis zu 2.200 V, ist die Isolation des Steckerteils 6 bzw. der Einzelkabelanschlüsse 10 mit ansonsten im Alltag gebräuchlichen Motoren ist nicht vergleichbar.

Dementsprechend ist die Isolierung 8 als auch die Isolierung 9 in vorteilhafter Weise aus Kunststoff. Das Steckerteil 6 wird beispielsweise derart hergestellt, dass Steckhülsen 13 in die Isolierung 8 eingebracht werden und über ein Fixierelement bzw. eine Schraube 14 an den metallischen Verbinder 5 angeschraubt werden.

Zur Herstellung einer 100 % wasser-/feuchtigkeitsdichten Ummantelung des Steckerteils 6 wird in vorteilhafter Weise die Isolierung 9 um den Verbinder 5 gegossen bzw. wird die Isolierung 9 in die entsprechende Ausnehmung der Isolierung 8 gegossen.

Darüber hinaus sind zwei Dichtelemente 15, 16 bzw. Ohrringe vorzugsweise aus Elastomermaterial vorgesehen, um auch im montierten Zustand des Steckerteils 6 eine vollständige Wasser-/Feuchtigkeitsabdichtung der Einzelkabelanschlüsse zu realisieren. D.h. insbesondere wird das Steckerteil 6 gegenüber dem Motorspindelgehäuse 7 mittels der Dichtungen 15, 16 abgedichtet. Hierbei dichtet die Dichtung 16 das Steckerteil 6 gegen ein Isolierelement 17 bzw. Isolierhülse 17 ab. Weiterhin ist das Isolierelement 17 mittels der Dichtung 15 gegenüber dem Spindelgehäuse 7 abgedichtet.

Die Isolierhülse 17 ist am Motorspindelgehäuse 7 fest verbaut, insbesondere mittels einer Presssitzfixierung fixiert. Die Isolierhülse 17 bildet nicht nur eine wasser-/feuchtigkeitsdichte Anordnung für das Steckerteil 6, sondern auch eine wasser-/feuchtigkeitsdichte Anordnung für die Einzelkabelstecker 11 bei entsprechender Einzelkabel-Verschaltung.

Wie in Figur 3 weiterhin deutlich wird, weist das Steckerteil 6 einen zylinderringförmigen Überlapp 18 bzw. einen Überstand auf, der mit der Isolierhülse 17, die vorzugsweise ebenfalls aus isolierendem Kunststoff besteht, eine lückenlose Isolation der Einzelkabelanschlüsse 10 in axialer Richtung gewährleistet. Das heißt, dass eine elektrische Isolation der Einzelkabelanschlüsse 10 längs einer Achse 19 vollständig bzw. lückenlos und somit sicher gewährleistet ist. Die Achse 19 stellt zugleich die Montage- bzw. Demontage-Steckrichtung des Steckerteils 6 dar.

Weiterhin ist das Steckerteil 6 derart ausgebildet, dass dies auch quer zur Achse 19 mit der Isolierhülse 17 überlappend ist, so dass auch hier eine lückenlose elektrische Isolation bzw. Ummantelung der Anschlüsse 10 realisiert wird.

Beim dargestellten Ausführungsbeispiel wird ersichtlich, dass ein einfaches Bauteil stirnseitig an die Motorspindel 4 gesteckt werden kann, um eine Motorspindel 4 mit sechs freien Einzelkabelanschlüssen 10 für eine Sternschaltung zu konfigurieren. Ohne das Steckerteil 6 ist dieselbe Motorspindel 4 aufgrund der sechs freien Einzelkabelanschlüsse 10 mit einer Dreieck- oder Stern-Dreieckschaltung betreibbar.

### Bezugszeichenliste

- 1: Spule
- 2: Spule
- 3: Spule
- 4: Motorspindel
- 5: Verbinder
- 6: Steckerteil
- 7: Motorspindelgehäuse
- 8: Isolierung
- 9: Isolierung
- 10: Kabelanschluss
- 11: Kabelstecker
- 12: Schraube
- 13: Hülse
- 14: Schraube
- 15: Dichtung
- 16: Dichtung
- 17: Isolierhülse
- 18: Überlapp
- 19: Achse

- U, V, W: Phase bzw. Wicklung
- U₁, V₁, W₁: Wicklungsanfang
- U₂, V₂, W₂: Wicklungsende

## Patentansprüche

1. Motorspindel mit einem Stator mit wenigstens drei Motorspulen (1, 2, 3), wobei eine Energieversorgung mit drei elektrischen Phasen (U, V, W) vorgesehen ist und wobei der Stator wenigstens sechs freie Anschlüsse zum elektrisch leitenden Anschließen von Motorspulenanfängen (U₁, V₁, W₁) und Motorspulenenden (U₂, V₂, W₂) der Motorspulen (1, 2, 3) an die drei Phasen (U, V, W) aufweist, wobei die sechs freien Anschlüsse (10) wenigstens in einem Dreiecksschaltungs-Modus der Motorspulen (1, 2, 3) als sechs freie Einzelkabelanschlüsse zum Anschließen an Einzelkabel ausgebildet sind, **dadurch gekennzeichnet, dass** die Motorspindel (4) eine Verbindungsvorrichtung (5, 6) zum elektrisch leitenden Verbinden von wenigstens drei Einzelkabelanschlüssen (10) umfasst, so dass ein Sternschaltungs-Modus der Motorspulen (1, 2, 3) realisierbar ist, und dass die sechs Anschlüsse (10) als Stecker oder Buchsen einer Steckverbindung ausgebildet sind, wobei die Verbindungsvorrichtung (5, 6) als lösbar verbindbarer Steckverbinder (6) zum lösbar verbindbaren Stecken auf die Einzelkabelanschlüsse (10) der Motorapulenanfänge (U₁, V₁, W₁) und/oder der Motorspulenenden (U₂, V₂, W₂) ausgebildet ist, und dass die Verbindungsvorrichtung (5, 6) wenigstens ein elektrisches Leiterelement (5) zum Verbinden der wenigstens drei Einzelkabelanschlüsse (10) aufweist, wobei wenigstens eine als elektrische Isoliereinheit (8, 9) ausgebildete Ummantelung zum elektrischen Isolieren und lückenlosen Ummanteln des elektrischen Leiterelementes (5) und der zu verbindenden Anschlüsse (10) vorgesehen ist, und dass wenigstens die mit der Verbindungsvorrichtung (5, 6) zu verbindenden Anschlüsse (10) jeweils ein elektrisches Isolierelement (17) aufweisen, wobei durch die Montage der verbindungsvorrichtung (5, 6) jedes der elektrischen Isolierelemente (17) jeweils mit der elektrischen Isoliereinheit (8, 9) einen zumindest in Montage-Richtung (19) ausgerichteten Isolations-Überlapp (18) ausbildet.

2. Motorspindel nach Anspruch 1, **dadurch gekennzeichnet, dass** die Einzelkabelanschlüsse (10) an einem Motorgehäuse (7) angeordnet sind.

3. Motorspindel nach einem der vorgenannten Ansprüche, **dadurch gekennzeichnet, dass** die Einzelkabelanschlüsse (10) an einer Stirnseite des Motorgehäuses (7) angeordnet sind.

4. Motorspindel nach einem der vorgenannten Ansprüche, **dadurch gekennzeichnet, dass** das elektrische Isolierelement (17) als Isolationshülse (17) ausgebildet ist.

5. Motorspindel nach einem der vorgenannten Ansprüche, **dadurch gekennzeichnet, dass** jeder der Anschlüsse (10) der Verbindungsvorrichtung (5, 6) wenigstens einen Isolations-Vorsprung (18) aufweist, wobei durch die Montage der Verbindungsvorrichtung (5, 6) jeder der Isolations-Vorsprünge (18) jeweils mit den elektrischen Isolierelementen (17) den Isolations-Überlapp (18) ausbildet.

6. Motorspindel nach einem der vorgenannten Ansprüche, **dadurch gekennzeichnet, dass** wenigstens eine Ummantelung (8, 9) zum feuchtigkeits- und/oder staubdichten Ummanteln des elektrischen Leiterelementes (5) und der zu verbindenden Anschlüsse (10) vorgesehen ist.

7. Motorspindel nach einem der vorgenannten Ansprüche, **dadurch gekennzeichnet, dass** wenigstens zwischen dem Stator (7) und der Verbindungsvorrichtung (5, 6) eine Dichteinheit (15, 16) zum Wasser dichten Abdichten der zu verbindenden Anschlüsse (10) vorgesehen ist.

8. Motorspindel nach einem der vorgenannten Ansprüche, **dadurch gekennzeichnet, dass** die Dichteinheit (15, 16) für jeden zu verbindenden Anschluss (10) jeweils wenigstens ein Dichtelement (15, 16) umfasst.

9. Motorspindel nach einem der vorgenannten Ansprüche, **dadurch gekennzeichnet, dass** die Isoliereinheit (8, 9) im Wesentlichen aus Kunststoff besteht.

10. Werkzeugmaschine mit einer Motorspindel (4) nach einem der vorgenannten Ansprüche.

## Claims

1. A motor spindle with a stator having at least three motor spools (1, 2, 3), wherein an energy supply with three electrical phases (U, V, W) is provided and wherein the stator has at least six free connections to the electro-conductive connections of motor spool beginnings (U₁, V₁, W₁) and motor spool ends (U₂, V₂, W₂) of the motor spools (1, 2, 3) to the three phases (U, V, W), wherein the six free connections (10) are designed at least in a delta connection mode of the motor spools (1, 2, 3) as six free individual cable connections for connection to individual cables, **characterized In that** the motor spindle (4) comprises a connection device (5, 6) for the electro-conductive connection of at least three individual cable connections (10), so that a star connection mode of the motor spools (1, 2, 3) can be implemented, and that the six connections (10) are designed as plugs or jacks of a plug connection, wherein the connection device (5, 6) is designed as a detachable, connectable plug connector (6) for the detachable connectable plugging in the individual cable connections (10) of the motor spool beginnings (U₁, V₁, W₁) and/or the motor spool ends (U₂, V₂, W₂), and that the connection device (5, 6) has at least one electrical conductor element (5) for connecting the at least three individual cable connections (10), wherein at least one sheathing designed as an electrical insulation unit (8, 9) is provided for the electrical insulation and gapless sheathing of the electrical conductor element (5) and of the connections (10) to be connected, and that at least the connections (10) to be connected with the connection device (5, 6) each have an electrical insulating element (17), wherein through the installation of the connection device (5, 6) each of the electrical insulating elements (17) in each case with the electrical insulating element (8, 9) forms an insulation overlap (18) oriented at least in the installation direction (19).

2. A motor spindle according to claim 1, **characterized in that** the individual cable connections (10) are arranged in a motor housing (7).

3. A motor spindle according to one of the aforementioned claims, **characterized in that** the individual cable connections (10) are arranged on an end face of the motor housing (7).

4. A motor spindle according to one of the aforementioned claims, **characterized in that** the electrical insulating element (17) is designed as an insulation sleeve (17),

5. A motor spindle according to one of the aforementioned claims, **characterized in that** each of the connections (10) of the connection device (5, 6) has at least one insulation protrusion (18), wherein through the installation of the connection device (5, 6) each of the Insulation protrusions (18) in each case with the electrical insulating elements (17) forms the insulation overlap (18).

6. A motor spindle according to one of the aforementioned claims, **characterized In that** at least one sheathing (8, 9) is provided for moisture- and/or dust-proof sheathing of the electrical conductor element (5) and of the connections to be connected (10).

7. A motor spindle according to one of the aforementioned claims, **characterized in that** at least between the stator (7) and the connection device (5, 6) a leak-proof unit (15, 16) is provided for the water-proof sealing of the connections (10) to be connected.

8. A motor spindle according to one of the aforementioned claims, **characterized in that** the leak-proof unit (15, 16) for each connection (10) to be connected comprises in each case at least one sealing element (15, 16).

9. A motor spindle according to one of the aforementioned claims, **characterized in that** the insulating element (8, 9) consists primarily of plastic.

10. A machine tool with a motor spindle (4) according to one of the aforementioned claims.

## Revendications

1. Broche de moteur, comportant un stator avec au moins trois bobines de moteur (1, 2, 3), une alimentation en énergie avec trois phases électriques (U, V, W) étant prévue et ledit stator comportant au moins six raccords libres pour le raccordement électroconducteur des débuts de bobine (U₁, V₁, W₁) et des fins de bobine (U₂, V₂, W₂) des bobines de moteur (1, 2, 3) aux trois phases (U, V, W), les six raccords (10) libres étant réalisés au moins dans un mode de circuit triangulaire des bobines de moteur (1, 2, 3) sous forme de six raccords libres pour câbles individuels destinés au raccordement à des câbles individuels, **caractérisée en ce que** la broche de moteur (4) comporte un dispositif de liaison (5, 6) pour la liaison électroconductrice d'au moins trois raccords (10) pour câbles individuels, de manière à pouvoir réaliser un mode de circuit en étoile des bobines de moteur (1, 2, 3), et **en ce que** les six raccords (10) sont réalisés sous forme de fiches mâles ou de fiches femelles d'un connecteur à fiches, ledit dispositif de liaison (5, 6), en tant que connecteur à fiches (6) apte à être relié de manière amovible, étant réalisé pour pouvoir être connecté de manière amovible avec les raccords (10) pour câbles individuels des débuts de bobine (U₁, V₁, W₁) et/ou des fins de bobine (U₂, V₂, W₂), et **en ce que** le dispositif de liaison (5, 6) comporte au moins un élément conducteur (5) électrique destiné à relier lesdits au moins trois raccords (10) pour câbles individuels, au moins un enrobage, réalisé sous forme d'unité d'isolation (8, 9) électrique, étant prévu pour réaliser l'isolement électrique et pour enrober complètement l'élément conducteur (5) électrique et les raccords (10) à relier, et **en ce qu'**au moins les raccords (10) à relier au dispositif de liaison (5, 6) comportent chacun un élément d'isolation (17) électrique, chacun des éléments d'isolation (17) électrique avec l'unité d'isolation électrique (8, 9) correspondante formant, sous l'effet du montage du dispositif de liaison (5, 6), un recouvrement isolant (18) orienté au moins dans le sens de montage (19).

2. Broche de moteur selon la revendication 1, **caractérisée en ce que** les raccords (10) pour câbles individuels sont agencés sur un carter (7) du moteur.

3. Broche de moteur selon l'une quelconque des revendications précédentes, **caractérisée en ce que** les raccords (10) pour câbles individuels sont agencés sur une face frontale du carter (7) du moteur.

4. Broche de moteur selon l'une quelconque des revendications précédentes, **caractérisée en ce que** l'élément d'isolation électrique (17) est réalisé sous la forme d'une gaine d'isolation (17).

5. Broche de moteur selon l'une quelconque des revendications précédentes, **caractérisée en ce que** chacun des raccords (10) du dispositif de liaison (5, 6) comporte au moins une saillie d'isolation (18), chacune des saillies d'isolation (18) avec les éléments d'isolation électriques (17) correspondants formant, sous l'effet du montage du dispositif de liaison (5, 6), le recouvrement isolant (18).

6. Broche de moteur selon l'une quelconque des revendications précédentes, **caractérisée en ce qu'**il est prévu au moins un enrobage (8, 9) pour enrober de manière étanche à l'humidité et/ou à la poussière l'élément conducteur électrique (5) et les raccords (10) à relier.

7. Broche de moteur selon l'une quelconque des revendications précédentes, **caractérisée en ce qu'**une unité d'étanchéité (15, 16), destinée à rendre les raccords (10) à relier étanches à l'eau, est prévue au moins entre le stator (7) et le dispositif de liaison (5, 6).

8. Broche de moteur selon l'une quelconque des revendications précédentes, **caractérisée en ce que** l'unité d'étanchéité (15, 16) comporte pour chaque raccord (10) à relier respectivement au moins un élément étanche (15, 16).

9. Broche de moteur selon l'une quelconque des revendications précédentes, **caractérisée en ce que** l'unité d'isolation (8, 9) est réalisée pour l'essentiel en matière plastique.

10. Machine-outil comportant une broche de moteur (4) selon l'une quelconque des revendications précédentes.
